Europäisches Patentamt

European Patent Office

Office européen des brevets

(11) Veröffentlichungsnummer: **0 261 620**
**A2**

## (12) EUROPÄISCHE PATENTANMELDUNG

(21) Anmeldenummer: 87113757.6

(22) Anmeldetag: 21.09.87

(51) Int. Cl.⁴: **H04B 3/00** , H04Q 3/52 ,
H04L 11/16

(30) Priorität: 23.09.86 DE 3632218

(43) Veröffentlichungstag der Anmeldung:
30.03.88 Patentblatt 88/13

(84) Benannte Vertragsstaaten:
AT BE CH DE ES FR GB IT LI NL SE

(71) Anmelder: **Standard Elektrik Lorenz**
**Aktiengesellschaft**
**Lorenzstrasse 10**
**D-7000 Stuttgart 40(DE)**

(84) **DE**

(71) Anmelder: **Alcatel N.V.**
**De Lairessestraat 153**
**NL-1075 HK Amsterdam(NL)**

(84) **BE CH ES FR GB IT LI NL SE AT**

(72) Erfinder: **Banniza, Thomas**
**Am Brückenberg 16**
**D-7118 Künzelsau(DE)**
Erfinder: **Klein, Michael, Dr.**
**Grabenstrasse 39**
**D-8501 Rückersdorf(DE)**
Erfinder: **Preisach, Helmut**
**Benninger Weg 24**
**D-7141 Murr(DE)**
Erfinder: **Wölk, Joachim**
**Neckarblick 59**
**D-7122 Besigheim(DE)**

(74) Vertreter: **Brose, Gerhard et al**
**Standard Elektrik Lorenz AG Patent- und**
**Lizenzwesen Postfach 30 09 29**
**D-7000 Stuttgart 30(DE)**

(54) **Schaltungsanordnung und Busschaltung mit hoher Bandbreite sowie Breitbandkoppelfeldbaustein.**

(57) Die Erfindung gibt einen Weg an, um bei technologiebedingter Bandbreitenbegrenzung (Innenwiderstand Ri, parasitäre Kapazität C) die effektive Bandbreite zu erhöhen. Hierzu wird ein zusätzlicher Widerstand (Ra) zwischen die Signalleitung (L) und einen Punkt mit festem Potential (UH) eingefügt.

Ausführungsbeispiele, insbesondere für integrierte Bauweise, werden angegeben.

Anwendungsbeispiele sind Busschaltungen und Breitbandkoppelfeldbausteine, wobei durch die erfindungsgemäße Maßnahme die Zahl der Koppelpunkte (Kapazität C) bei gleicher Bandbreite erhöht werden kann.

Fig 1

# Schaltungsanordnung und Busschaltung mit hoher Bandbreite sowie Breitbandkoppelfeldbaustein

Die Erfindung betrifft eine Schaltungsanordnung nach dem Oberbegriff des Anspruchs 1, eine Busschaltung nach dem Oberbegriff des Anspruchs 7 und einen Breitbandkoppelfeldbaustein nach dem Oberbegriff des Anspruchs 8.

Nahezu jede elektrische Schaltungsanordnung fällt unter den Oberbegriff des Anspruchs 1. Ausgenommen hiervon sind vor allem Filter, bei denen die Bandbreite durch gezielte Maßnahmen begrenzt ist. Grundsätzlich jedoch ist bei jeder elektrischen Schaltungsanordnung die Bandbreite durch die obere Grenzfrequenz begrenzt. Das Problem der begrenzten Bandbreite ist von so grundsätzlicher Bedeutung, daß auch schon sehr viele fertige Lösungen vorliegen. Beispielsweise gibt es auf dem Gebiet der digitalen Logikschaltungen mehrere Schaltungsfamilien, die hinsichtlich ihrer logischen Funktionen gleich sind, jedoch unter anderem was die Bandbreite betrifft, unterschiedlich sind. In Grenzbereichen spielt dieses Problem aber immer eine große Rolle. So kann beispielsweise in einer integrierten Schaltung der Längswiderstand einer Leitung, also auch eines Kanals in einem Transistor, durch Vergrößerung des Leitungsquerschnitts verringert werden. Die Kapazität wird dabei aber im selben Maß erhöht, so daß das Produkt aus Widerstand und Kapazität gleich bleibt. Da aber ein Leitungslängswiderstand zusammen mit einer Querkapazität einen Tiefpaß bildet, dessen Grenzfrequenz vom Produkt aus Widerstand und Kapazität abhängt, kann durch derartige geometrische Maßnahmen die Bandbreite nicht erhöht werden. Dieses Problem verschärft sich bei einer Busschaltung, wo eine Mehrzahl von Treiberschaltungen auf eine gemeinsame Signalleitung geschaltet sind. Dabei müssen immer alle Treiberschaltungen bis auf eine gesperrt sein, um einen ordnungsgemäßen Betrieb zu gewährleisten. Die Kapazitäten der gesperrten Treiberschaltungen bilden dann eine zusätzliche Last für die nicht gesperrte Treiberschaltung. Dagegen sind die Kapazitäten der Signalleitung selbst und daran angeschlossener Signaleingänge von untergeordneter Bedeutung. Ein Breitbandkoppelfeldbaustein, bei dem durch eine Vielzahl von Koppelpunkten je eine Verbindung zwischen einem von mehreren Signaleingängen und einem von mehreren Signalausgängen herstellbar ist, weist pro Signalausgang eine solche Busschaltung auf, wobei pro Signaleingang und Busschaltung eine Treiberschaltung vorhanden ist. Die Bandbreite eines solchen Breitbandkoppelfeldbausteins hängt damit direkt von der Zahl der Signaleingänge ab. Bei gegebener Technologie und bei vorgegebener Bandbreite ist damit auch die Größe des Koppelfelds vorgegeben, sofern keine in der vorgegebenen Technologie realisierbaren Maßnahmen zur Erhöhung der Bandbreite ergriffen werden können.

Bei diesen Problemen schafft die Erfindung Abhilfe durch eine Schaltungsanordnung nach der Lehre des Anspruchs 1, eine Busschaltung nach der Lehre des Anspruchs 7 und einen Breitbandkoppelfeldbaustein nach der Lehre des Anspruchs 8.

Durch Einfügen eines Widerstands zwischen die Signalleitung und einen Punkt mit festem Potential wird wechselstrommäßig dem Innenwiderstand ein Widerstand parallel geschaltet, so daß sich der für den Tiefpaß wirksame Widerstand effektiv verringert, wodurch die Bandbreite erhöht wird. Um Nichtlinearitäten zu berücksichtigen wird das feste Potential vorteilhaft in der Mitte der Versorgungsspannung, bei Analogschaltungen im Arbeitspunkt, gewählt. Fügt man einen zweiten Widerstand hinzu, der mit einem zweiten Punkt mit abweichendem Potential verbunden ist, so liegt ein Spannungsteiler vor, mit dem sowohl der effektive Widerstand als auch ein die Funktion der Schaltung möglichst nicht beeinflussendes Potential einstellbar ist. Insbesondere bei integrierter Schaltungstechnik werden die Widerstände in vorteilhafter Weise durch Transistoren realisiert. Die erfindungsgemäße Schaltungsmaßnahme hat natürlich nicht nur vorteilhafte Wirkungen. Zum einen ergibt sich ein zusätzlicher Leistungsverbrauch, zum anderen wird der Signalhub verringert, da das Produkt aus Verstärkung und Bandbreite konstant ist. Die Verwendung von Transistoren hat den Vorteil, daß sie abgeschaltet werden können, wenn dieser Teil der Schaltung nicht benötigt wird und daß durch Änderung der Ansteuerung eine Anpassung an die tatsächlich benötigte Bandbreite möglich ist. Wegen der Reduzierung des Signalhubs und der damit verbundenen zusätzlichen Störmöglichkeiten sollte eine solche Maßnahme aber nur dort erfolgen, wo es unbedingt nötig ist, d.h. zwischen denjenigen beiden Stufen im Verlauf eines Signalwegs, zwischen denen die Bandbreite am meisten begrenzt ist. Bei einem Breitbandkoppelfeldbaustein, bei dem ein Signal zwischen einem Signaleingang und einem Signalausgang außer dem eigentlichen Koppelfeld noch eine Reihe von Signalaufbereitungs- und Überwachungsschaltungen, z.B. Eingangs-und Ausgangstrennverstärker und -synchronisierschaltungen, durchläuft, tritt die größte Bandbegrenzung, wie schon beschrieben, im Koppelfeld in den Busschaltungen auf, die zu einem gemeinsamen Signalausgang führen.

Im folgenden wird die Erfindung anhand von Ausführungsbeispielen unter Zuhilfenahme der beiliegenden Zeichnung weiter erläutert.

Figur 1 zeigt ein Ersatzschaltbild zur Erklärung der Wirkungsweise einer erfindungsgemäßen Schaltungsanordnung.

Figuren 2 bis 5 zeigen Ausführungsbeispiele erfindungsgemäßer Schaltungsanordnungen.

Figur 6 zeigt das Blockschaltbild eines erfindungsgemäß ausgebildeten Breitbandkoppelfeldbausteins.

Figur 7 zeigt das Koppelfeld des Breitbandkoppelfeldbausteins gemäß Figur 6. Es weist eine Mehrzahl erfindungsgemäßer Busschaltungen auf.

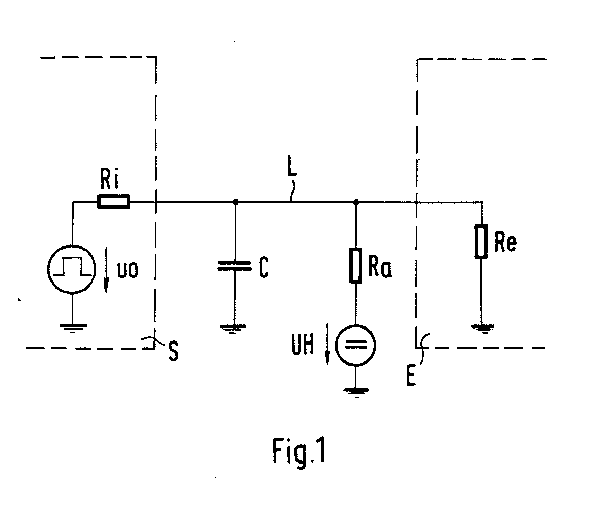

Zunächst wird anhand der Figur 1 der Grundgedanke der Erfindung erläutert. Ein Sendeteil S ist über eine Signalleitung L mit einem Empfangsteil E verbunden. Sendeteil S und Empfangsteil E sind zwei beliebige aufeinanderfolgende Stufen im Verlauf eines Signalwegs. Das Sendeteil S ist charakterisiert durch einen Innenwiderstand Ri und eine Urspannungsquelle uo. Die Urspannungsquelle uo ist in der Zeichnung als Quelle eines Digitalsignals dargestellt. Das Empfangsteil E ist charakterisiert durch einen Eingangswiderstand Re. Es wird davon ausgegangen, daß die Signalleitung L so kurz ist, daß sie nicht mit ihrem Wellenwiderstand abgeschlossen werden muß. In solchen Fällen ist der Eingangswiderstand Re um Größenordnungen größer als der Innenwiderstand Ri. Der Ausgang des Sendeteils S, der Eingang des Empfangsteils E und die Signalleitung L sind mit unvermeidlichen Kapazitäten behaftet, die in Figur 1 als nach Masse gehende Kapazität C einge zeichnet sind. Es ist offensichtlich, daß der Innenwiderstand Ri und die Kapazität C einen Tiefpaß bilden. Der Eingangswiderstand Re ist wechselstrommäßig dem Innenwiderstand Ri parallel geschaltet und ändert grundsätzlich nichts an der Tiefpaßeigenschaft.

Erfindungsgemäß ist nun ein weiterer Widerstand Ra wechselstrommäßig dem Innenwiderstand Ri parallel geschaltet. Grundsätzlich ändert sich dadurch das Tiefpaßverhalten nicht; die obere Grenzfrequenz und damit die Bandbreite können dadurch jedoch deutlich erhöht werden. An dieser Prinzipschaltung ist aber auch schon erkennbar, daß der Signalhub durch diese Maßnahme reduziert wird. Der Innenwiderstand Ri und der Widerstand Ra bilden, zusammen mit dem praktisch vernachlässigbar hohen Eingangswiderstand Re einen Spannungsteiler. Ein nicht unerheblicher Teil der Signalamplitude liegt hierbei bereits am Innenwiderstand Ri und wirkt sich am Empfangsteil E nicht mehr aus. Hier ist erkennbar, daß diese Maßnahme ein Notbehelf ist und nicht bedenkenlos angewendet werden sollte.

Des weiteren ist in Figur 1 noch eine Hilfsspannungsquelle UH zwischen den Widerstand Ra und Masse eingefügt. Diese Hilfsspannungsquelle UH, die eine Gleichspannungsquelle ist, hat auf den Frequenzgang der Schaltungsanordnung keinen Einfluß. Der Widerstand Ra kann mit jedem Punkt festen Potentials verbunden sein. Insbesondere kommen die ohnehin vorhandenen Masse-und Versorgungsspannungspotentiale in Frage. Um die Gleichspannungsverhältnisse nicht zu beeinflussen oder einen Arbeitspunkt einzustellen, kann das feste Potential auch in der Mitte der Versorgungsspannung liegen. Dies ist vor allem dann von Bedeutung, wenn die Schaltungsanordnung nichtlinear ist.

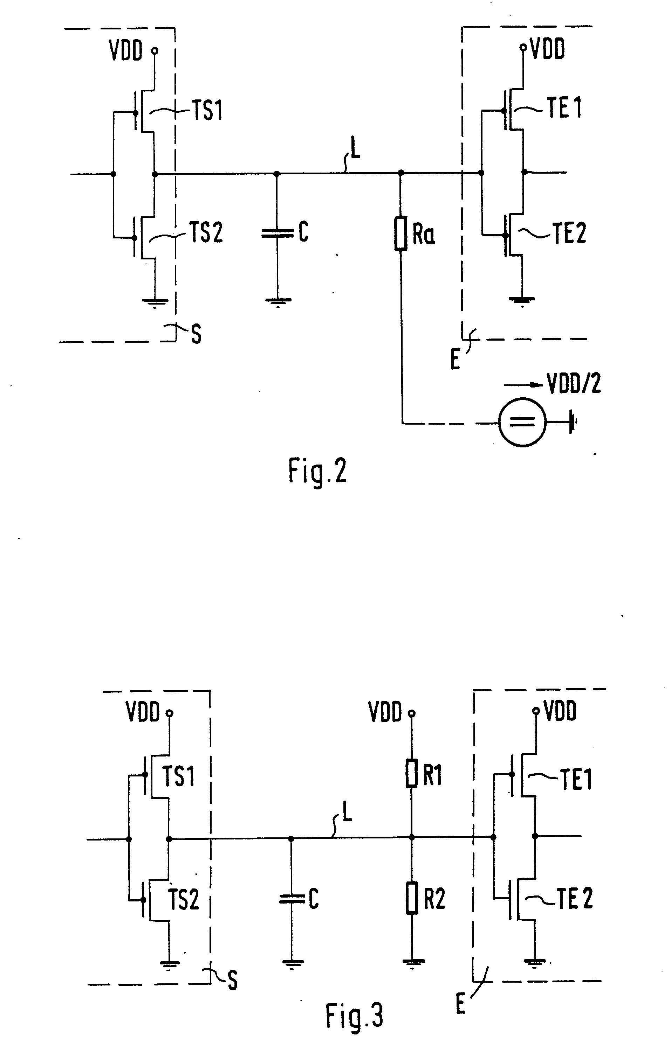

Figur 2 zeigt eine praktische Ausgestaltung der Prinzipschaltung von Figur 1. Das Sendeteil enthält eine aus zwei Transistoren TS1 und TS2 bestehende Treiberschaltung, die zwischen der Versorgungsspannung VDD und Masse liegt. Beide Transistoren TS1 und TS2 werden gemeinsam angesteuert, wobei jeweils einer der beiden leitend, der andere sperrend ist. Das Empfangsteil S enthält, ebenfalls zwischen der Versorgungsspannung VDD und Masse, eine gleichartige, aus zwei Transistoren TE1 und TE2 bestehende Eingangsschaltung, die über die Signalleitung L vom Ausgangssignal des Sendeteils S angesteuert werden. Der Widerstand Ra ist in diesem Beispiel mit der halben Versorgungsspannung VDD/2 verbunden.

Wie diese halbe Versorgungsspannung VDD/2 erzeugt wird, ist in diesem Beispiel nicht gezeigt. Eine für mehrere gleichartige Schaltungsanordnungen gemeinsam erzeugte Hilfsspannung von der Größe VDD/2 ist wegen der dann erforderlichen Leitungsführung und einer möglichen Signalverkopplung über den Innenwiderstand der Hilfsspannungsquelle manchmal unerwünscht.

Figur 3 zeigt eine geringfügige Abwandlung des Beispiels nach Figur 2. Der Widerstand Ra ist aufgeteilt in zwei Widerstände R1 und R2, von denen der eine mit Masse, der andere mit der Versorgungsspannung VDD verbunden ist. Damit kann über das Verhältnis der Widerstände R1 und R2 die Hilfsspannung und über den Absolutwert der beiden Widerstände die Bandbreite beeinflußt werden.

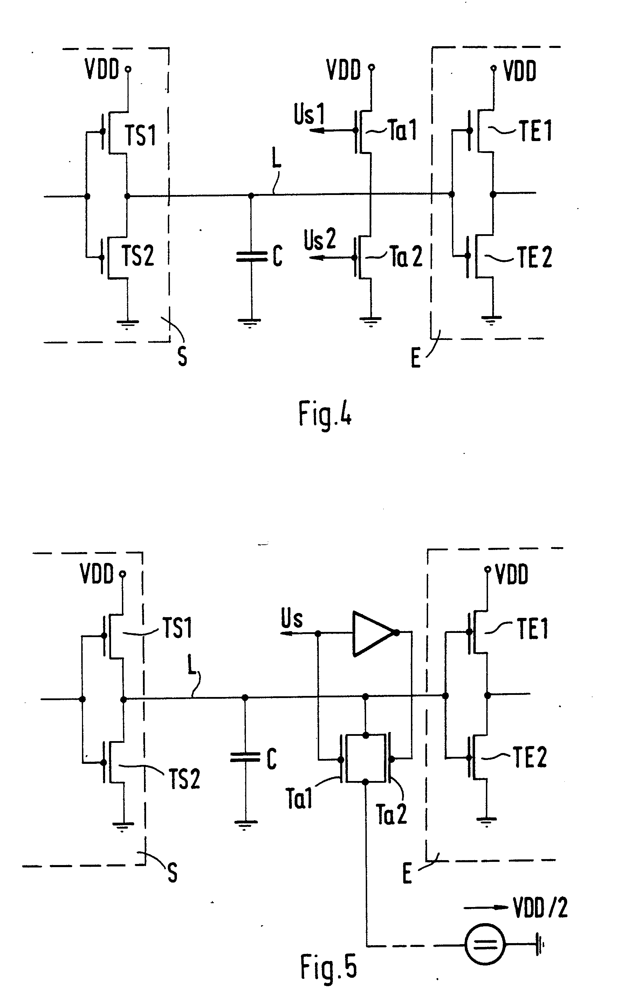

Figur 4 zeigt eine Abwandlung der Schaltung nach Figur 3 für den praktisch sehr bedeutsamen Fall, daß die Schaltungsanordnung Bestandteil einer integrierten Schaltung ist. In diesem Fall werden auch die Widerstände R1 und R2 als Transistoren, hier Ta1 und Ta2 ausgeführt. Die Ansteuerung der beiden Transistoren über eine Steuer spannung Us1 und eine Steuerspannung Us2 erfolgt gleichspannungsmäßig, kann sowohl fest verschaltet, als auch von außen beliebig einstellbar sein. Damit ist es möglich, die Reduzierung des Signalhubs und die Verlustleistung in den Transistoren Ta1 und Ta2 in Abhängigkeit vom jeweiligen Einsatzfall so gering wie möglich zu halten.

Figur 5 zeigt ein weiteres Ausführungsbeispiel, das Merkmale des Ausführungsbeispiels nach Figur 2 und Merkmale des Ausführungsbeispiels nach Figur 4 in sich vereinigt. Der Widerstand Ra von Figur 2 ist hier durch eine Parallelschaltung zweier Transistoren Ta1 und Ta2 ersetzt. Diese werden durch eine Steuerspannung Us unter Zuhilfenahme eines nicht näher bezeichneten Inverters gegensinnig angesteuert, so daß sie, der gegensinnigen Polarität wegen, jeweils beide ein-oder beide ausgeschaltet sind. Mit dieser Schaltungsanordnung kann nur eine Umschaltung erfolgen, die für viele praktische Fälle ausreicht.

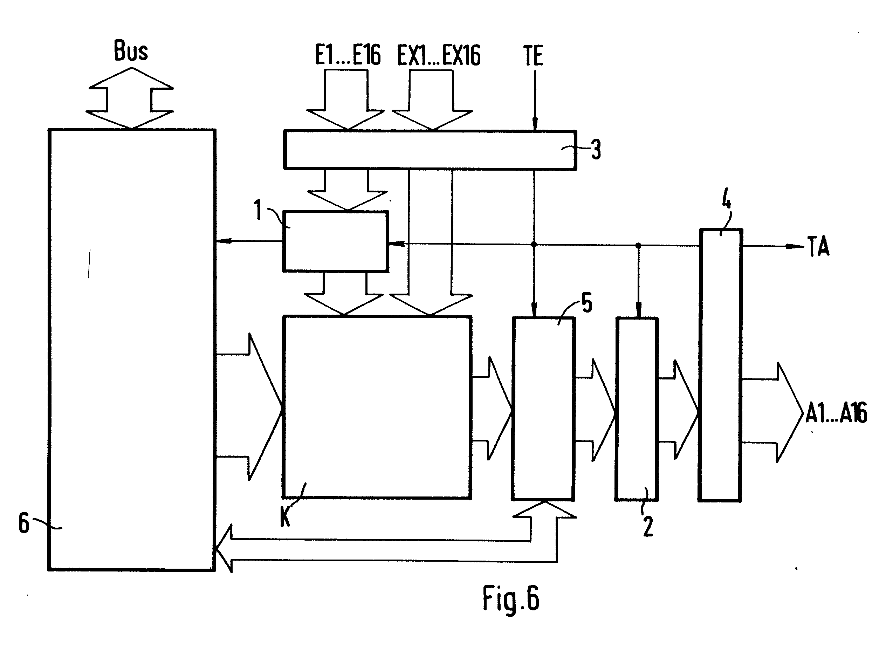

Figur 6 zeigt das Blockschaltbild eines Breitbandkoppelfeldbausteins mit 16 Signaleingängen E1 bis E16, 16 Erweiterungseingängen EX1 bis EX16, einem Takteingang TE, einem Taktausgang TA, 16 Signalausgängen A1 bis A16 und einem Steuerdatenbus BUS. Die Signalwege gelangen über Eingangstrennverstärker 3 ins Innere des Breitbandkoppelfeldbausteins und über Ausgangstrennverstärker 4 wieder nach außen. Die über die Signaleingänge E1 bis E16 ankommenden Signale werden in einer Eingangssynchronisationseinrichtung 1 synchronisiert, vor Verlassen des Breitbandkoppelfeldbausteins werden sie in einer Ausgangssynchronisationseinrichtung 2 erneut synchronisiert. Die Erweiterungseingänge EX1 bis EX16 sind mit Signalausgängen A1 bis A16 eines räumlich unmittelbar benachbarten vorangehenden Koppelfeldbausteins verbunden. Ihre Signale brauchen deshalb nicht synchronisisert werden. Kern des Breitbandkoppelfelds ist eine Koppelmatrix K. Am Ausgang der Koppelmatrix K ist eine Überwachungseinrichtung 5 angeordnet, die es erlaubt, die 16 Ausgangssignale zu überwachen. Zur Ansteuerung der Koppelmatrix K und zur Überwachung mit Hilfe der Überwachungseinrichtung 5 ist eine Decodier-und Steuereinrichtung 6 vorhanden. Nähere Einzelheiten zu diesem Koppelfeldbaustein, die aber für das Verständnis der vorliegenden Erfindung nicht erforderlich sind, sind in den folgenden Deutschen Patentanmeldungen enthalten: P 34 41 501.7, P 35 04 835.2, P 35 10 566.6 und P 35 43 392.2.

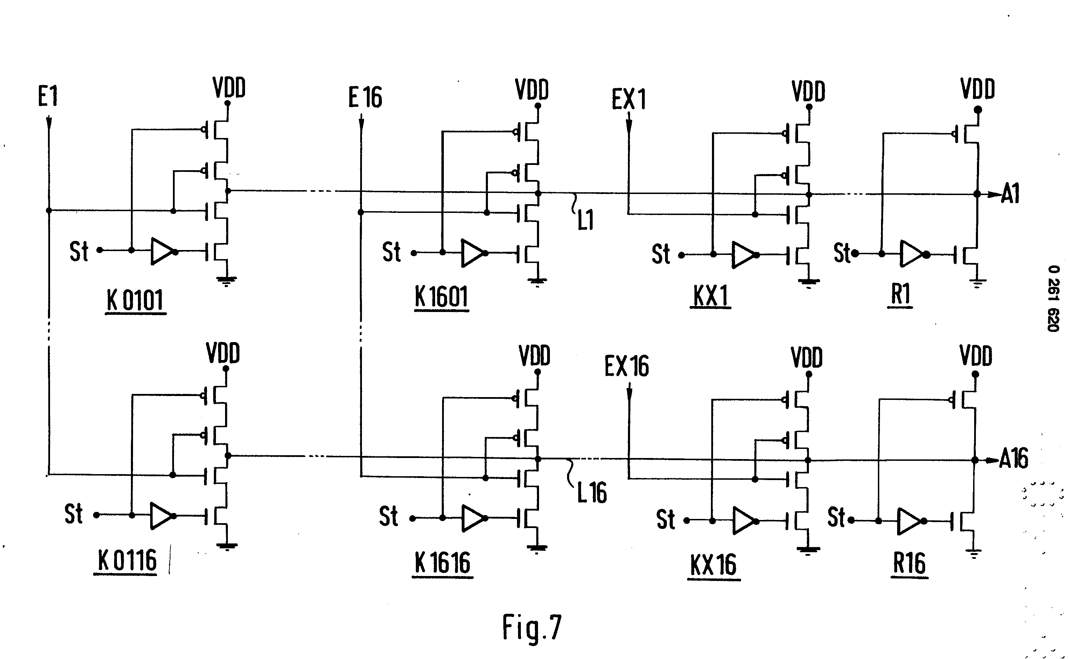

Die Koppelmatrix K und ihre erfindungsgemäße Ausgestaltung wird nun anhand der Figur 7 näher erläutert.

Die Koppelmatrix K ist aus Zeilen und Spalten aufgebaut, wobei jede Zeile einem der Signalausgänge A1 bis A16 und jede Spalte einem der Signaleingänge E1 bis E16 oder einem der Erweiterungseingänge EX1 bis EX16 zugeordnet ist. Am Schnittpunkt einer Spalte, die einem der Signaleingänge E1 bis E16 zugeordnet ist, mit einer Zeile ist jeweils ein Koppelpunkt K0101 bis K1616 angeordnet. Jeder Koppelpunkt weist zwei Transistorpaare auf, wobei ein Transistorpaar durch ein Steuersignal St und das zweite Transistorpaar durch das vom zugeordneten Signaleingang kommende Signal angesteuert wird. Das Steuersignal wird in jedem Koppelpunkt noch invertiert, so daß entweder beide Transistoren des zugehörigen Transistorpaars geöffnet oder beide geschlossen sind. Das Steuersignal St kommt von der Decodier- und Steuereinrichtung 6. Damit wird festgelegt, welches der Eingangssignale zu einem bestimmten Signalausgang durchgeschaltet wird. Das zweite Transistorpaar wird gleichsinnig angesteuert, so daß wegen der gegensinnigen Polarität der Transistoren immer einer der beiden geöffnet und der andere geschlossen ist. Gleichartige Koppelpunkte KX1 bis KX16 sind auch dort, wo sich eine von den Erweiterungseingänge EX1 bis EX16 kommende Spalte mit der zum zugehörigen Signalausgang gehenden Zeile kreuzt. Es kann also vom Erweiterungseingang EX1 zum Signalausgang A1, vom Erweiterungseingang EX2 zum Signalausgang A2 usw. durchgeschaltet werden. Jede zu einem Signalausgang führende Zeile bildet also eine aus einer Anzahl von Koppelpunkten, einer Signalleitung L1 bis L16 und dem Eingang der nachfolgenden Baugruppe * bestehende Busschaltung. Jeder Koppelpunkt bildet eine Treiberschaltung, wobei höchstens eine Treiberschaltung aktiv ist, während alle anderen gesperrt sind und eine kapazitive Last für die aktive Treiberschaltung darstellen. Über den zugehörigen Erweiterungseingang, der mit dem zugehörigen Signalausgang eines vorangehenden Breitbandkoppelfeldbausteins verbunden sein kann, kann eine Vielzahl weiterer Signaleingänge indirekt mit dieser Busschaltung verbunden sein, ohne sie nennenswert zu belasten. Dies stellt eine Möglichkeit dar, um bei vorgegebener Bandbreite die Zahl der Signaleingänge erhöhen zu können. Die Erfindung gibt nun eine weitere Möglichkeit an, um bei gegebener Bandbreite die Zahl der Signaleingänge erhöhen zu können. Dies ist gleichwertig mit der Möglichkeit, bei gegebener Zahl der Signaleingänge die Bandbreite zu erhöhen. Hierzu wird, wie in den vorangegangenen Ausführungsbeispielen gezeigt, ein zusätzlicher Widerstand eingefügt. Dies ist in Figur 7 durch die als Widerstände R1 bis R16 bezeichneten Schaltungen dargestellt. Die Steuersignale St können hierbei in erster Linie dazu verwendet werden, bei nicht beschalteten Ausgängen diese Schaltung hochohmig zu machen.

* Hier Überwachungseinrichtung 5

## Ansprüche

1. Schaltungsanordnung mit zwei aufeinanderfolgenden Stufen (S, E), die durch eine Signalleitung (L) miteinander verbunden sind und bei der zwischen den beiden Stufen (S, E) durch endliche Innenwiderstände (Ri) und unvermeidliche Kapazitäten (C) die Bandbreite begrenzt ist, **dadurch gekennzeichnet**, daß zur Erhöhung der Bandbreite ein Widerstand (Ra, R1) zwischen die Signalleitung (L) und einen Punkt mit festem Potential (UH, VDD, Masse) eingefügt ist.

2. Schaltungsanordnung nach Anspruch 1, dadurch gekennzeichnet, daß das feste Potential in der Mitte der Versorgungsspannung (VDD/2, Arbeitspunkt) liegt.

3. Schaltungsanordnung nach Anspruch 1 oder 2, dadurch gekennzeichnet, daß ein zweiter Widerstand (R2) zwischen die Signalleitung (L) und einen zweiten Punkt mit einem vom ersten festen Potential (VDD, Masse) abweichenden zweiten festen Potential (Masse, VDD) eingefügt ist.

4. Schaltungsanordnung nach einem der Ansprüche 1 bis 3, dadurch gekennzeichnet, daß ein Transistor (T1a, T2a) als Widerstand (Ra, R1, R2) eingesetzt ist.

5. Schaltungsanordnung nach Anspruch 4, dadurch gekennzeichnet, daß der Widerstandswert des Transistors (T1a, T2a) zur Anpassung an die tatsächlich benötigte Bandbreite durch Änderung der Ansteuerung des Transistors (T1a, T1b) änderbar ist.

6. Schaltungsanordnung nach einem der Ansprüche 1 bis 5, bei der im Verlauf eines Signalwegs mehrmals zwei Stufen aufeinanderfolgen, dadurch gekennzeichnet, daß der Widerstand (Ra, R1, R2) zur Erhöhung der Bandbreite zwischen denjenigen beiden Stufen eingefügt ist, zwischen denen die Bandbreite am meisten begrenzt ist.

7. Busschaltung mit einer Signalleitung (L1,...,L16), mit einer Anzahl von Treiberschaltungen (K0101,...,K1601, KX1; ...; K0116,...,K1616, KX16), die bis auf maximal eine Treiberschaltung gesperrt sind und eine kapazitive Last darstellen und mit einer Eingangsstufe, die das Signal von der Signalleitung abnimmt, **dadurch gekennzeichnet**, daß sie als Schaltungsanordnung nach einem der Ansprüche 1 bis 6 ausgebildet ist.

8. Breitbandkoppelfeldbaustein mit einer Mehrzahl von Signaleingängen (E1,...,E16, EX1, ..., EX16) , einer Mehrzahl von Signalausgängen (A1, ..., A16), einer Vielzahl von Koppelpunkten (K0101, ..., K1616, KX1, ..., KX16) zur Herstellung je einer Verbindung zwischen einem Signaleingang und einem Signalausgang, und mit einer Mehrzahl von Signalaufbereitungs-und Überwachungsschaltungen (1, ..., 5), **dadurch gekennzeichnet**, daß die einem gemeinsamen Signalausgang (A1, ..., A16) zugeordneten Koppelpunkte (K0101, ..., K1601, KX1; ...; K0116, ..., K1616, KX16) als Busschaltung nach Anspruch 7 ausgebildet sind.

Fig.1

Fig.2

Fig.3

T. Banniza 1-4-1-4
21. 8. 87

Fig.4

Fig.5

T. Banniza 1-4-1-
21. 8. 87

Fig.6

Bus

E1...E16   EX1...EX16   TE

3

1

4

TA

5

2

6

K

A1...A16

0 261 620

T. Banniza 1-4-1-
21. 8. 87

Fig.7

0 261 620

T. Banniza 1-4-1-4
21. 8. 87.